# EUROPÄISCHE PATENTSCHRIFT

(11) **EP 1 315 638 B1**
(45) Veröffentlichungstag und Bekanntmachung des Hinweises auf die Patenterteilung: **30.03.2005**
(21) Anmeldenummer: 01962991.4
(22) Anmeldetag: 01.09.2001
(51) Int. Cl.: B60N 3/04, B60R 13/08

(54) **BODENBELAG MIT HOHER GERÄUSCHMINDERNDER WIRKUNG**
FLOOR COVERING WITH IMPROVED SOUNDPROOFING PROPERTIES
REVETEMENT DE SOL A ACTION INSONORISANTE ELEVEE

(30) Priorität: 09.09.2000 DE 10044761; 17.01.2001 DE 10101819
(43) Veröffentlichungstag der Anmeldung: 04.06.2003
(73) Patentinhaber: HP-Chemie Pelzer Research and Development Ltd., Waterford (IE)
(72) Erfinder: NICOLAI, Norbert, 46514 Schermbeck (DE); SCHULZE, Volkmar, 84069 Schierling (DE)
(74) Vertreter: Jönsson, Hans-Peter, Dr.Dipl.-Chem.
(86) Internationale Anmeldenummer: PCT/EP2001/010101
(87) Internationale Veröffentlichungsnummer: WO 2002/020307

(56) Entgegenhaltungen:
- WO-A-00/05707
- WO-A-92/01587
- DE-A- 2 611 855
- DE-A- 4 204 831
- PATENT ABSTRACTS OF JAPAN vol. 2000, no. 05, 14. September 2000 (2000-09-14) -& JP 2000 034937 A (MITSUBISHI MOTORS CORP), 2. Februar 2000 (2000-02-02)

## Beschreibung

Die vorliegende Erfindung betrifft einen Bodenbelag mit hoher geräuschmindernder Wirkung für die Innenausstattung von Verkehrsmitteln.

In der DE 197 54 107 C1 und dem hier referierten Stand der Technik, auf den voll inhaltlich Bezug genommen wird, wird das Absorptionsverhalten mikroperforierter Bauteile untersucht. In der genannten Schrift werden aus mikroperforierten Folien geschichtet aufgebaute Baffle-Strukturen untersucht, die als sogenannte Kompaktabsorber von einer Decke oder einem Dach abhängt. Die mikroperforierten Folien sind geeignet, einseitig oder beidseitig, senkrecht, schräg oder streifend auftreffende Schallwellen aus dem Raum, insbesondere bei höheren Frequenzen, sehr wirkungsvoll zu absorbieren.

Bekannt sind weiter Aufbauten, bei denen eine schallundurchlässige Fläche mit Lochungen versehen ist, um eine absorptive Wirkung des darunterliegenden Absorbers zu erreichen, siehe beispielsweise DE 41 23 593 A und WO 92/01587.

DE 295 07 971 U1 betrifft ein Bodendämpfungssystem für Automobile mit einem porösen Teppichbodenaufbau ohne Angabe von Lochgrößen.

DE 299 15 428 U1 betrifft ein Schallabschirmelement zum Schutz vor Schallausbreitung aus dem Lärmbereich von insbesondere Fahrzeugen und anderen Maschinen und Geräten, unter Verwendung einer zahlreiche Durchbrechungen aufweisenden Schicht, das dadurch gekennzeichnet ist, dass die Schicht als selbstragendes Schallschutzformteil ausgebildet ist und ein Lochflächenverhältnis (LV) zwischen 0,001 und 20 % bei einer Formteildicke (d) zwischen 0,02 und 50 mm und einer mittleren Breite (b) bzw. einem mittleren Durchmesser (D) durch Durchbrechungen zwischen 0,001 und 2 mm aufweist.

DE 92 00 439 U1 betrifft ein trittfestes, steifes Formteil, insbesondere für den Bodenbereich im Fahrgastraum von Automobilen, daseine standfeste Unterbauschicht aus einem verrottungsbeständigen ersten Kunststoffmaterial und eine zur Sichtseite hin über der Unterbauschicht angeordnete Dekorschicht aus einem zweiten Kunststoffmaterial oder Naturstoffmaterial und gegebenenfalls eine oder mehrere zwischen Unterbauschicht und Dekorschicht und/oder auf der Rückseite der Unterbauschicht angeordnete Dichtschicht(en) aus weiteren Kunststoffmaterialien aufweist, wobei alle Schichten zu einem Mehrschichtenaufbau laminiert sind. Das Formteil ist dadurch gekennzeichnet, dass die Unterbauschicht eine Faserkomponente und eine darin verteilte thermoplastische Binderkomponente aufweist, deren Anteil zur Erzeugung der erforderlichen Steifigkeit des Formteils geeignet ist.

In der DE 39 05 607 A1 wird ein Schichtaufbau zur Herstellung von Schallisolierungen und ein Verfahren zu ihrer Herstellung beschrieben. Zu diesem Zweck besteht die akustisch wirksame Schicht aus einem thermoverformbaren, absorbierenden, zu Schaum verarbeitbaren Kunststoff, und/oder mindestens einer Schicht aus einem Vlies. Der Schichtaufbau bzw. die damit hergestellte Schallisolierung kann insbesondere zur Bodenverkleidung von Kraftfahrzeugen eingesetzt werden.

DE 26 11 855 A1 beschreibt ein Kraftfahrzeugteppichzuschnitt aus Schaumkunststoff.

DE 42 04 831 A1 beschreibt eine Matte mit einer Schicht aus geschäumten Kunststoff.

JP 34 937/2000 A beschreibt eine Fasermatte zur Schallabsorption im Motorraum.

Die im Automobilbereich eingesetzten Bodenverkleidungen integrieren verschiedene Funktionen, denen man bei der Herstellung gerecht werden muss: ästhetische Ansprüche (Oberflächenoptik, angenehme Haptik), Nivellierung von Oberflächenkonturen der Karosserie, akustische Funktionen (Dämpfung, Absorption und Isolation), beste Nutzungseigenschaften (geringster Verschleiß, hohe Durchtrittsfestigkeit, gute Reinigungseignung, hohe Lichtbeständigkeit), Einschäumen zusätzlicher Bauteile (Befestigung von Fußmatten, Teile zur Erhöhung der Trittfestigkeit), Aussparungen für Fondraumheizung sowie für Kabelkanäle, Aufschweißen von Trittschutz und Fußstütze. Dabei ist dann noch die Prozesseignung zu garantieren: extreme Tiefziehfähigkeit ohne Funktionseinbußen, Durchschäumsicherheit des Materialaufbaus, Recyclingfähigkeit. In letzter Zeit gewinnt das Emissionsverhalten hierbei enorm an Bedeutung. Der somit heute übliche Materialaufbau einer Bodenverkleidung im Automobilbereich ist der folgende:

Flor/Tuftingträger/Einbindung/Kaschierkleber/Schwerfolie/Abdeckvlies/Weichschaum. Bei Mittelklasse- und Luxusklassefahrzeugen setzt man Tufting-Velours-Qualitäten ein, und bei Kompaktklassefahrzeugen Flachnadelvliese und Dilours-Qualitäten. Auch findet man hier beflockte, gestrickte, gewirkte und gewebte Materialien sowie Malivliese. Als Beschichtung werden Latex und Polyolefine (insbesondere PE) sowie thermoformbare Vlieskonstruktionen eingesetzt. Anstatt eines PUR-Weichschaumes (mit Raumgewichten ≥ 60 kg/m³) . setzt man auch locker verpresste duroplastisch oder thermoplastisch gebundene Textilfaservliese sowie Kombinationen von Schaumstoff- oder Vliesschichten mit verschiedenen Strömungswiderständen ein. Das Schallschluckvermögen der Bodenverkleidung kann erhöht werden, wenn eine poröse, luft- und somit schalloffene Schicht zwischen der eigentlichen Oberware und der prozessbedingten Dichtschicht beziehungsweise der Schwerfolie eingefügt wird. Als poröse, luft- und somit schalloffene Schicht (Absorptionsschicht) finden hier Polyester- und Mischfaservliese Anwendung; zur Verhinderung des Wassereintritts in den Materialaufbau der Bodenverkleidung ist diese hydrophob ausgestattet. Die oftmals zusätzlich zur Schwerfolie eingesetzte Dichtfolie soll den Schaumdurchschlag beim Hinterschäumen verhindern. Im Zuge der Gewichtseinsparung verzichtet man - entsprechend der Motorisierung und der Karosseriegestaltung - heute teilweise auch ganz auf die Schwerfolie (Flächengewichte liegen hier zwischen 0,8 und 10 kg/m²); und setzt nur Dichtfolien (Mehrschichtfolien mit Flächengewichten zwischen 0,04 und 0,35 kg/m²) ein.

Nachteilig ist, dass bei allen bekannten Bodenbelägen eine Schallabsorption allein auf die Oberfläche oder eine dünne Unterschicht beschränkt bleibt und damit eine Absorption auch nur bedingt wirksam werden kann.

Aufgabe der Erfindung ist es, einen Bodenbelag mit hoher geräuschmindernder Wirkung für die Innenausstattung von Verkehrsmitteln bereitzustellen, welcher fahrgastseitig eine textile oder nichttextile Oberfläche wie beispielsweise Kunststoff, Gummi, Metall oder Naturstoff aufweist, und damit einen leichten Aufbau erlaubt.

Erfindungsgemäß wird die Aufgabe gelöst, durch einen Bodenbelag für die Innenausstattung von Verkehrsmitteln, der fahrgastseitig mit einer textilen oder nichttextilen Oberfläche ausgestattet ist gattungsgemäß nach der DE 2 611 855 A, dadurch gekennzeichnet, dass diese Oberfläche akustisch zu einer aus Faservlies und/oder geschäumten Kunststoff bestehenden Bodenbelags - Unterschicht über wenigstens eine mikrogelochte Folie mit einem Lochdurchmesser der mikrogelochten Schicht von 0,2 bis 0,5 mm und einem Lochabstand der mikrogelochten Schicht von 3 bis 7 mm gekoppelt ist.

Die Oberfläche des Bodenbelages kann unabhängig von Material schalldurchlässig gestaltet werden. Damit erfolgt einer Ankopplung der zum Karosserieblech liegenden Bodenbelag-Unterschicht.

Die erfindungsgemäßen Bodenbeläge weisen insbesondere fahrgastseitig eine textile oder nichttextile Oberfläche wie Kunststoff, Gummi, Metall oder Naturstoff auf, die akustisch bevorzugt durch Mikrolochung zu einer aus Faservlies und/oder geschäumten Kunststoff bestehenden Bodenbelags-Unterschicht über wenigstens eine mikrogelochte Folie gekoppelt ist. Die mikrogelochte Folie übernimmt dabei die Wirkung 1.) einer Schwerschicht im Masse-Feder-System und 2.) eines Absorbers.

Zur Erzielung einer definierten Absorption wird in einer bevorzugten Ausführungsform die Schalldurchlässigkeit durch eine luftdurchlässige Einbindung der Fasern bei Teppichen und/oder durch eine Mikrolochung der obersten Materialschicht bei geschlossenen Oberflächen und/oder weiterer Schichten im Aufbau des Bodenbelages erreicht.

Die dem Innenraum zugewandte Seite kann dabei je nach Gestaltung des Bodenbelags wie folgt aufgebaut sein:
a) eine textile Teppichoberfläche bestehend aus einem
   - Tuftteppich
   - oder einem Nadelvliesteppich unterschiedlicher Nadlungen.
   Zur Erreichung der Luftdurchlässigkeit und der damit verbundenen akustischen Ankopplung ist die Art der Fasereinbindung so gewählt, dass eine mikroporöse Struktur entsteht.
b) eine textile Teppichoberfläche, die auf der Rückseite mit einer dichten Kunststoffschicht versehen ist;
c) ein Flockteppich auf textilen oder polymeren Untergrund;
d) eine polymere Oberfläche, die ein - oder zweilagig aufgebaut ist, wie beispielsweise eine TPO beschichtete Schwerschicht;
e) eine metallische Oberfläche, wie beispielsweise nicht rostendes Stahl- oder Aluminiumblech mit unterschiedlichen Oberflächenprofilen oder
f) eine organische Oberfläche, wie beispielsweise Holz oder Kork,
g) Leder oder Kunstleder.

Für die unter b) bis g) genannten Aufbauten wird die gewünschte Schalldurchlässigkeit durch eine Mikrolochung erreicht.

Die Mikrolochung ist so gestaltet, dass bedingt durch den Lochdurchmesser, den Lochabstand und den gegebenen bzw. realisierten Abstand zum Karosserieblech sowie der Materialdicke eine hohe akustische Wirkung durch die Mikrolochung speziell bei niederen Frequenzen (< 350 bis 550 Hz) erreicht wird. Durch die Ankopplung zu den Bodenbelagsunterschichten wird eine Absorption im hohen Frequenzbereich erreicht.

Darüber hinaus sollten die Lochdurchmesser so groß gewählt werden, dass einfaches Wasser (Wasser ohne Veränderung der Oberflächenspannung) nicht ohne zusätzliche Wirkung durch die Schicht hindurchtritt. Desweiteren kann die Oberfläche der Bodenbelag-Unterschicht hydrophob ausgerüstet werden, so dass eine weitere Wassersperre vorhanden ist.

Die Lochdurchmesser betragen insbesondere bei nur einer Lochschicht 0,2 bis 0,5 mm, bevorzugt 0,3 bis 0,4 mm, der Lochabstand 3 bis 7 mm, bevorzugt 3,5 bis 5,5 mm. Hierbei ist es selbstverständlich möglich, im Falle der Anwesenheit mehrerer mikrogelochter Schichten, diese jeweils mit einem unterschiedlichen oder gleichen Lochflächenanteil auszugestalten. Die Löcher können nach an sich im Stand der Technik bekannten Verfahren, beispielsweise durch Stanzen mittels Loch- oder Nadelwalzen oder Laserbestrahlung mit beliebiger Geometrie in die Schicht eingebracht werden.

Wird der Lochflächenanteil zu gering gewählt, so ist eine schallabsorbierende Wirkung nicht oder nicht in ausreichendem Maße vorhanden, während andererseits bei einem zu hoch gewählten Lochflächenanteil die schallabsorbierende Wirkung des mikrogelochten Absorbers wieder nachlässt. Außerdem werden entsprechend hergestellte Verkleidungs- oder Formelemente im Fahrzeugbereich mechanisch geschwächt.

Die Oberflächenschichten der unter b) bis g) genannten Materialien dienen gleichzeitig als Schwerschicht im Masse - Feder - System.

Durch den steifen Aufbau übernimmt diese Oberflächenschicht zusätzlich die Stabilisierung des Aufbaus des Bodenbelages.

Der erfindungsgemäße Teppichbodenaufbau kann beispielsweise durch eine Klebeverbindung, Nadelung oder Direkthinterschäumung an einen zum Karosserieblech darunter liegenden Schaum- und/oder Vliesabsorber verbunden sein oder auch nur lose aufliegen.

Im Nachfolgenden soll diese Erfindung an einigen Beispielen näher erläutert werden.

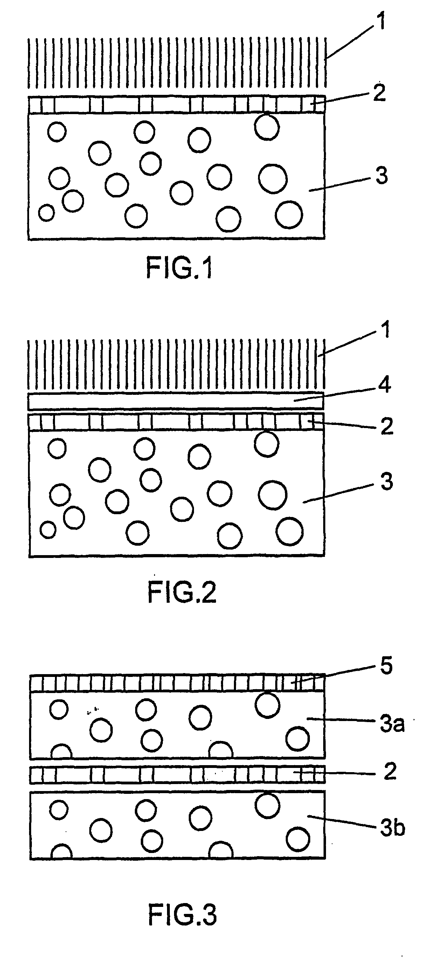

In der Fig. 1 wird ein erfindungsgemäß hergestellter Bodenbelag mit hoher geräuschmindender Wirkung beschrieben.

Die textile Oberware 1, die beispielsweise aus einem Nadelvlies oder Tufting besteht, ist über eine mikrogelochte Schwerschicht 2 mit einem üblichen Vlies- oder Schaumstoffrücken 3 verbunden.

In der Fig. 2 wird ebenfalls ein erfindungsgemäß hergestellter Bodenbelag beschrieben, bei dem die textile Oberware 1 beispielsweise Nadelvlies oder Tufting sein kann. Dieses wird zusätzlich auf ein Untervlies 4 aufgebracht, das mit einer mikrogelochten Trennfolie, beispielsweise einer Schwerschicht 2 oder Dichtfolie an einen üblichen Vlies- oder Schaumstoffrücken 3 gekoppelt ist.

In der Fig. 3 wird eine weitere Variation der erfindungsgemäßen Bodenbeläge dargestellt. Die mikrogelochte Nutzbodenoberfläche 5, beispielsweise aus einer thermoplastischen Polyolefinfolie (TPO) ist über ein erstes Vlies oder Schaumstoffabsorbersystem 3a und eine mikrogelochte Trennfolie, beispielsweise eine Schwerschicht 2 oder Dichtfolie an eine rückseitig angebrachte Vlies- oder Schaumstoffschicht 3b gebunden.

## Patentansprüche

1. Bodenbelag für die Innenausstattung von Verkehrsmitteln, der fahrgastseitig mit einer textilen oder nichttextilen Oberfläche ausgestattet ist,
**dadurch gekennzeichnet, dass** diese Oberfläche akustisch zu einer aus Faservlies und/oder geschäumten Kunststoff bestehenden Bodenbelags - Unterschicht über wenigstens eine mikrogelochte Folie mit einem Lochdurchmesser der mikrogelochten Schicht von 0,2 bis 0,5 mm und einem Lochabstand der mikrogelochten Schicht von 3 bis 7 mm gekoppelt ist.

2. Bodenbelag nach Anspruch 1, **dadurch gekennzeichnet, dass** die Fasereinbindung einer textilen Oberfläche mit einer mikrogelochten Folie erfolgt, die gleichzeitig die Kopplungsfunktion zu einer Bodenbelags-Unterschicht übernimmt.

3. Bodenbelag nach Anspruch 1, **dadurch gekennzeichnet, dass** die Oberfläche besteht aus einem textilen Teppichboden, der auf der Rückseite mit einer mikrogelochten Kunststoffschicht versehen ist.

4. Bodenbelag nach Anspruch 1, **dadurch gekennzeichnet, dass** die Oberfläche besteht aus einem Flockteppich auf textilem oder polymerem mikrogelochten Untergrund.

5. Bodenbelag nach Anspruch 1, **dadurch gekennzeichnet, dass** die Oberfläche besteht aus einer polymeren mikrogelochten Oberfläche, die ein - oder zweilagig aufgebaut ist, insbesondere eine mit einer thermoplastischen Polyolefinschicht beschichtete Schwerschicht.

6. Bodenbelag nach Anspruch 1, **dadurch gekennzeichnet, dass** die Oberfläche besteht aus einer metallischen mikrogelochten Oberfläche, insbesondere aus nicht rostendem Stahl- oder Aluminium mit unterschiedlichen Oberflächenprofilen.

7. Bodenbelag nach Anspruch 1, **dadurch gekennzeichnet, dass** die Oberfläche besteht aus einer organischen mikrogelochten Oberfläche, insbesondere Holz, Kork, Leder oder Kunstleder.

8. Bodenbelag nach Anspruch 1, **dadurch gekennzeichnet, dass** der Lochdurchmesser der gelochten Schicht 0,3 bis 0,4 mm beträgt.

9. Bodenbelag nach Anspruch 1, **dadurch gekennzeichnet, dass** der Lochabstand der mikrogelochten Schicht 3,5 bis 5,5 mm beträgt.

## Claims

1. A floor covering for the interior trim of means of transport, which has, on the passenger side, a textile or non-textile surface, **characterized in that** this surface is acoustically coupled to a floor covering sublayer made of a fibrous non-woven and/or foamed plastic through at least one microperforated sheet having a hole diameter of the microperforated layer of from 0.2 to 0.5 mm and an interhole distance of the microperforated layer of from 3 to 7 mm.

2. The floor covering according to claim 1, **characterized in that** the fiber bonding of a textile surface is effected with a microperforated sheet which simultaneously adopts the coupling function to a floor covering sublayer.

3. The floor covering according to claim 1, **characterized in that** the surface consists of a textile carpet floor which is provided with a microperforated plastic layer on its backside.

4. The floor covering according to claim 1, **characterized in that** the surface consists of a flocked carpet on a textile or polymeric microperforated substrate.

5. The floor covering according to claim 1, **characterized in that** the surface consists of a polymeric microperforated surface having a one-layer or two-layer structure, especially heavy layer coated with a thermoplastic polyolefin layer.

6. The floor covering according to claim 1, **characterized in that** the surface consists of a metallic microperforated surface, especially of stainless steel or aluminum with different surface profiles.

7. The floor covering according to claim 1, **characterized in that** the surface consists of an organic microperforated surface, especially wood, cork, leather or artificial leather.

8. The floor covering according to claim 1, **characterized in that** the hole diameter of the perforated layer is from 0.3 to 0.4 mm.

9. The floor covering according to claim 1, **characterized in that** the interhole distance of the microperforated layer is from 3.5 to 5.5 mm.

## Revendications

1. Tapis de sol pour la décoration intérieure de moyens de transport, équipé avec une surface textile ou non-textile sur le côté tourné vers les passagers, **caractérisé en ce que** ladite surface est couplée acoustiquement avec une couche inférieure du tapis de sol consistant en un voile et/ou une matière plastique alvéolaire à travers d'au moins une feuille microperforée ayant un diamètre de pores de la couche microperforée de 0,2 à 0,5 mm et une distance entre les pores de la couche microperforée de 3 à 7 mm.

2. Tapis de sol selon la revendication 1, **caractérisé en ce que** le bondage fibreux d'une surface textile est effectué avec une feuille microperforée qui en même temps assume la fonction de couplage avec une couche inférieure du tapis de sol.

3. Tapis de sol selon la revendication 1, **caractérisé en ce que** la surface consiste en un tapis de sol textile muni avec une couche en matière plastique microperforée sur la face arrière.

4. Tapis de sol selon la revendication 1, **caractérisé en ce que** la surface consiste en un tissu floque sur un substrat microperforé textile ou polymère.

5. Tapis de sol selon la revendication 1, **caractérisé en ce que** la surface consiste en une surface microperforée polymère construite avec une ou deux couches, notamment en une couche lourde revêtue d'une couche de polyoléfine thermoplastique.

6. Tapis de sol selon la revendication 1, **caractérisé en ce que** la surface consiste en une surface microperforée métallique, notamment en acier inoxydable ou aluminium avec des profiles de surface différents.

7. Tapis de sol selon la revendication 1, **caractérisé en ce que** la surface consiste en une surface microperforée organique, notamment en bois, liège, cuir ou cuir artificiel.

8. Tapis de sol selon la revendication 1, **caractérisé en ce que** le diamètre de pores de la couche perforée est de 0,3 à 0,4 mm.

9. Tapis de sol selon la revendication 1, **caractérisé en ce que** la distance entre les pores de la couche microperforée est de 3,5 à 5,5 mm.
